Europäisches Patentamt

European Patent Office

Office européen des brevets

(19)

Veröffentlichungsnummer: **0 432 550 A2**

# (12) EUROPÄISCHE PATENTANMELDUNG

(21) Anmeldenummer: 90122446.9

(22) Anmeldetag: 24.11.90

(51) Int. Cl.5 **G01M 3/20, G01M 3/32**

(30) Priorität: 12.12.89 DE 3940922

(43) Veröffentlichungstag der Anmeldung:
**19.06.91 Patentblatt 91/25**

(84) Benannte Vertragsstaaten:
**DE FR GB IT NL SE**

(71) Anmelder: **JW Froehlich Maschinenfabrik GmbH**
**Fabrikstrasse 34**
**W-7310 Plochingen(DE)**

(72) Erfinder: **Buchholz, Klaus**
**Karlstrasse 30**
**W-7050 Waiblingen(DE)**

(74) Vertreter: **Wilhelm & Dauster Patentanwälte**
**European Patent Attorneys**
**Hospitalstrasse 8**
**W-7000 Stuttgart 1(DE)**

(54) **Vorrichtung zur Prüfung der Dichtheit von Behältern.**

(57)
1. Vorrichtung zur Prüfung der Dichtheit von Behältern.

2.1 Behälter, die in einer Vakuumkammer auf Dichtheit geprüft werden, neigen im Bereich von ebenen Seitenwänden zum Ausbeulen.

2.2 Erfindungsgemäß wird vorgeschlagen, der Prüfkammer im Bereich solcher ausbeulender Wände eine elastische, mit gleichmäßig auf der gesamten Fläche verteilten Abstütznoppen versehene Wand zuzuordnen, die mit derselben Druckdifferenz gegen die zum Ausbeulen neigende Seitenwand gedrückt wird, wie diese zum Ausbeulen angeregt wird.

2.3 Verwendung für Lecktesteinrichtungen von Fässern.

3.

FIG. 4

# VORRICHTUNG ZUR PRÜFUNG DER DICHTHEIT VON BEHÄLTERN

Die Erfindung betrifft eine Vorrichtung zur Prüfung der Dichtheit von Behältern, insbesondere von Fässern, die mit mindestens einer im wesentlichen eben verlaufenden Stirnwand versehen sind, bestehend aus mindestens einer Prüfkammer zur Aufnahme der Behälter, aus Einrichtungen, mit denen die Prüfkammer evakuierbar ist und aus einer jeweils der Stirnwand des Behälters zugeordneten an der Prüfkammer angebrachten Abstützeinrichtung, mit der ein Ausbeulen der Stirnwand verhindert wird.

Es gibt eine ganze Reihe von Behältern, insbesondere in Faßform, bei denen es auf die Dichtheit ankommt. Dies gilt insbesondere für die Aufnahme von Flüssigkeiten, welche schädliche Gase entwickeln, die nicht aus den Fässern austreten dürfen.

Es ist bekannt, hierfür Prüfungsvorrichtungen vorzusehen, bei denen die Fässer in eine mit Vakuum beaufschlagbare Prüfkammer eingesetzt werden, nachdem sie vorher mit einem Impfgas zum Teil gefüllt wurden, das sich mit bekannten Meßmethoden auf besonders einfache und genaue Weise nachweisen läßt. Der in der Prüfkammer auftretende Unterdruck bewirkt den Austritt des Testgases an Leckstellen des Behälters und eine der Prüfkammer zugeordnete Meßeinrichtung kann auf diese Weise feststellen, ob der Prüfling über seinen gesamten Umfang dicht ist oder nicht.

Da die zu prüfenden Behälter, insbesondere Fässer, wie angedeutet, vor dem Verschließen zwar mit einem Testgas geimpft, im Inneren aber im übrigen unter Atmosphärendruck stehen, bewirkt das Anlegen von Unterdruck in der Prüfkammer, daß innerhalb der Behälter bzw. der Fässer ein relativer Überdruck entsteht, der dazu führt, die Behälterwände nach außen zu beulen. Dies kann insbesondere an den ebenen Stirnwänden von Fässern oder ähnlich geformter Behälter zu einer irreversiblen, nicht zulässigen Verformung der Stirnwand, oder auch zum Bersten des Behälters führen. Um dies zu vermeiden, ist es bekannt, an diese ausbeulgefährdeten Stirnflächen eine an der Prüfkammer angeordnete Abstützeinrichtung anzulegen, die beispielsweise mit einem einstellbaren Federdruck gegen die Stirnwand drückt. Es ist schwierig und bedarf der jeweiligen Anpassung an verschiedene Behälter, diese Abstützkraft so einzustellen, daß sie den gewünschten Abstützeffekt bringt. Prüfvorrichtungen der bekannten Art sind daher relativ aufwendig.

Aus der GB-PS 840 294 ist es bei einer Einrichtung zur Leckprüfung von Behältern zwar schon bekannt, zwischen einer festen Prüfkammerbehälterwand und dem zu prüfenden Behälter eine elastische Hülle vorzusehen, die sich beim Auftreten einer Druckdifferenz zwischen ihrer Innen- und Außenseite allseitig dicht an die Wandungen des Behälters anlegt. Nur in den z.B. die Stirnwand eines Fasses umgebenden Saumbereichen und an bestimmten Stellen, an denen feste Einlagen in die Hülle eingebracht sind, die z.B. den Stellen einer Fasslängsnaht entsprechen können, entstehen Kanäle, die das Volumen der Prüfkammer bilden. Bei einer solchen Einrichtung werden zwar die Wände des zu prüfenden Behälters gegen Druckdifferenzen abgestützt und das geringere Volumen der Prüfkammer erlaubt auch eine schnellere und wirtschaftliche Prüfung. Es ist aber nicht möglich, die gesamte Oberfläche des Behälters auf diese Weise auf Dichtheit zu prüfen. Das ist aber die Aufgabe bei Vorrichtungen der eingangs genannten Art.

Der Erfindung liegt daher die Aufgabe zugrunde, bei einer Vorrichtung zur Prüfung der Dichtheit der eingangs genannten Art die Schwierigkeiten der Einjustierung der Abstützkraft zu vermeiden.

Gemäß der Erfindung wird dies dadurch erreicht, daß die Abstützeinrichtung aus einer elastischen, an ihrer der Stirnwand zugewandten Seite mit Vorsprüngen zur Abstützung an dieser versehenen und an ihrer Rückseite an einen Raum, in dem der Atmosphärendruck herrscht, angrenzenden Wand besteht, die in etwa parallel zu der Stirnwand angeordnet und mit ihren Rändern dicht an einem Teil der Prüfkammer gehalten ist. Durch diese Ausgestaltung wird auf die elastische Wand, deren Größe zweckmäßig an die der abzustützenden Stirnfläche angepaßt wird, durch den in der Prüfkammer entstehenden Unterdruck eine Kraft ausgeübt, die der Kraft der sich ausbeulenden Stirnwand in etwa mit gleicher Größe entgegenwirkt. Eine Einjustierung von Abstützkräften wird dadurch überflüssig. Die neue Einrichtung arbeitet auch unabhängig davon, wie niedrig der Unterdruck ist, der in der Prüfkammer herrscht.

Die Erfindung geht dabei von der an sich bekannten Erkenntnis aus, daß zwei sich gegenüberliegende verformbare Wände, zwischen denen ein Unterdruck herrscht, auf deren Rückseite aber jeweils der gleiche Druck vorliegt, auch mit den gleichen Kräften beaufschlagt werden, wenn sie elastisch genug ausgelegt sind. Da sich dann die von jeder Wand ausgeübten Kräfte gegenseitig neutralisieren, kann auf diese Weise eine einfache, aber wirksame Abstützung von Stirnwänden erreicht werden, die sonst zum Ausbeulen neigen. Durch die Anordnung der Vorsprünge wird dabei erreicht, daß über die gesamte Fläche der elastischen Wand Verbindungswege freibleiben, die den Unterdruck der Prüfkammer auch an der Stirnseite anliegen lassen, auch wenn sich die Wand an die Stirnseite andrückt. Die gesamte Fassoberfläche kann auf diese Weise auf Dichtheit getestet werden.

Vorteilhafte Weiterbildungen der Erfindung sind in den Unteransprüchen gekennzeichnet. Die Merkmale des Anspruches 3 und 4 ermöglichen eine besonders einfache Bauart für die Prüfung zylindrischer Fässer, wobei der als Abstützeinrichtung ausgebildete Kunststoffbalg die Möglichkeit eines größeren Verformungsweges zur Verfügung stellt, so daß in sehr einfacher Weise auch eine Anlage an den Stirnflächen von Fässern besteht, die hinter einem umlaufenden Rand zurückgesetzt sind und in einer zylindrischen Prüfkammer mit kreisrundem Abschlußdeckel eingesetzt werden können, der ebenfalls mit Abstand zu den stirnseitigen Rändern des Fasses angeordnet ist. Die Merkmale der Ansprüche 5 und 6 bringen den Vorteil mit sich, daß der in der Prüfkammer auftretende Unterdruck sich in sehr einfacher Weise bis in die Mitte der Kunststoffkappe ausbreiten kann und nicht durch an der Stirnseite des Fasses anliegende Bereiche der Kunststoffkappe von bestimmten Bereichen zwischen Kunststoffkappe und Stirnseite des Fasses abgedichtet ist. Auch die Stirnseite des Fasses kann daher sicher auf Dichtheit geprüft werden.

Die Merkmale des Anspruches 7 erlauben eine einfache und dichte Befestigung der Kunststoffbalgkappe. Die Merkmale der Ansprüche 8 und 9 gewährleisten eine gewisse Steifigkeit im Anlegebereich und sorgen daher auch für eine möglichst gleichmäßige Gegenkraft gegenüber der sich ausbeulenden Stirnwand und die Merkmale des Anspruches 10 schließlich bewirken für den Fall, daß sich in unvorhersehbarer Weise an den in- und außerhalb der Prüfkammer herrschenden Drücken etwas ändert, eine mechanische Abstützung für die Kunststoffkappe, die in jedem Fall ein übermäßiges Ausbeulen einer Faßstirnseite vermeidet.

In der Zeichnung ist die Erfindung anhand eines Ausführungsbeispieles dargestellt, das im folgenden erläutert wird. Es zeigen:

Fig. 1    eine schematische Frontansicht einer erfindungsgemäß ausgebildeten Vorrichtung zum Prüfen der Dichtheit von Fässern,

Fig. 2    die teilweise aufgebrochene Seitenansicht der Vorrichtung der Fig. 1 in Richtung des Pfeiles II gesehen,

Fig. 3    die Draufsicht auf die Vorrichtung der Fig. 1 und 2,

Fig. 4    eine vergrößerte Teildarstellung des Abschlußbereiches der in der Testposition befindlichen Trommel der Vorrichtung gemäß der Erfindung,

Fig. 5    eine Frontansicht der balgartigen Kunststoffkappe in Fig. 4 in Richtung des Pfeiles V und

Fig. 6    die Darstellung des Schnittes längs der Linie VI-VI in Fig. 5.

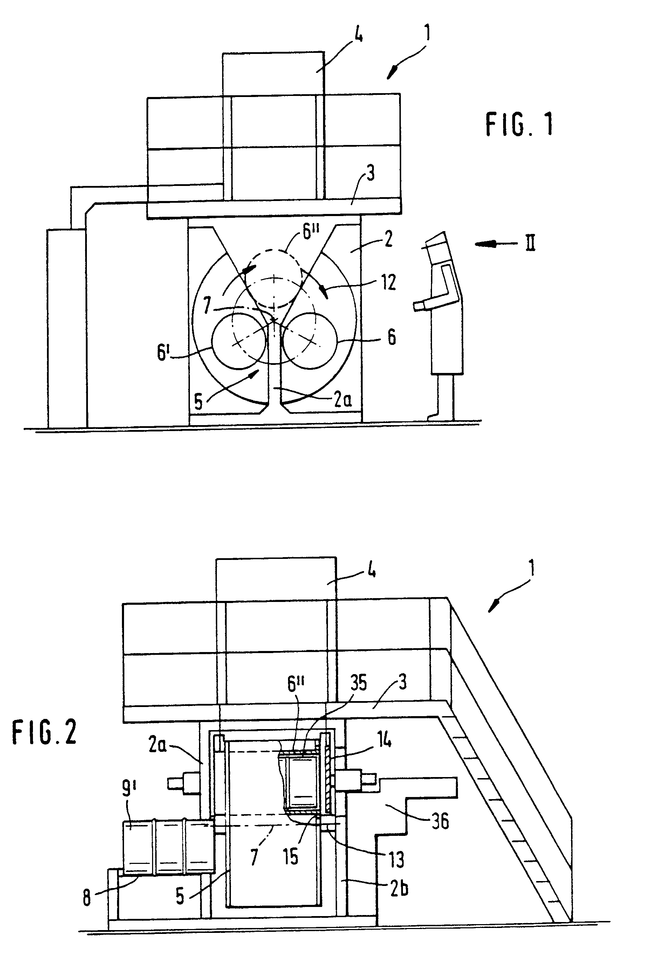

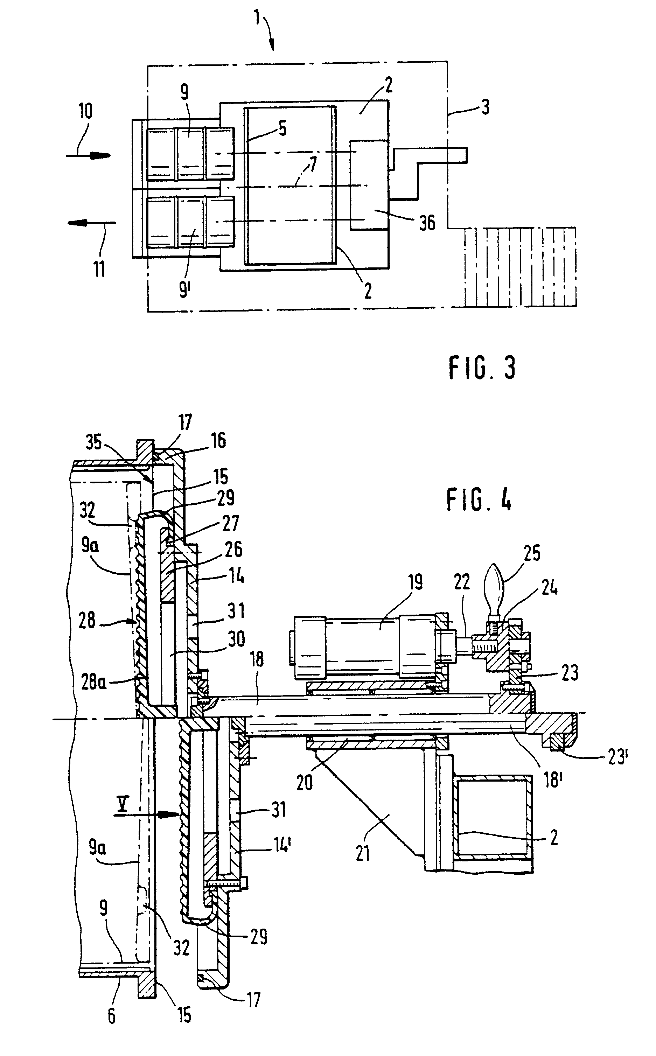

In den Fig. 1 bis 3 ist eine Lecktestprüfmaschine (1) gezeigt, die aus einem ortsfest auf dem Boden angeordneten Gestell (2) besteht, das etwa rahmenförmig ausgebildet ist und von einer Plattform (3) überdacht wird, deren Konturen in der Fig. 3 strichpunktiert angedeutet sind. Auf dieser Plattform sind in nicht näher dargestellter Weise Meßeinrichtungen und eine Vakuumpumpeneinrichtung in einem Gehäuse (4) angeordnet.

In dem Gestell (2) ist drehbar ein Radstern (5) angeordnet, der mit drei, jeweils um 120° zueinander versetzt angeordneten zylindrischen Trommel (6) versehen ist, die an dem Radstern (5) um eine gemeinsame Achse (7) drehbar angeordnet sind. In der Position (6 und 6') (Fig. 1) sind zwei der zylindrischen Trommeln (6) in einer gemeinsamen Horizontalebene angeordnete, die so gewählt ist, daß auf einer Laderampe (8) liegende Fässer (9, 9') ebenfalls so hoch liegen, daß sie ohne Schwierigkeiten in die zylindrischen Kammern eingeschoben bzw. aus diesen wieder entnommen werden können. Wie Fig. 3 zeigt, wird dabei das Faß (9) durch eine nicht näher erläuterte Beladeeinrichtung, zum Beispiel mit Hilfe eines pneumatischen Zylinders, in Richtung des Pfeiles (10) in die zylindrische Kammer in der Position (6') eingeschoben, während gleichzeitig das Faß (9') im Sinne des Pfeiles (11) aus der der Kammer (6') in der gleichen Horizontalebene gegenüberliegenden Kammer (6) mit Hilfe eines ebenfalls nicht gezeigten pneumatischen Schiebers herausbewegt wird. Während dieses Be- und Entladevorganges, das an den zylindrischen Trommeln (6 und 6') stattfindet, befindet sich die dritte zylindrische Trommel in der Position (6''), wird dort in noch zu schildernder Weise an beiden, oder zumindest an einer Seite geschlossen, unter Unterdruck gesetzt und mit Hilfe nicht gezeigter Meßinstrumente abgefühlt, ob sich Testgas in der zylindrischen Trommel befindet. Ist dieser Testvorgang beendet, dreht sich der Radsternn (5) in dem Gestell (2) im Sinn der Pfeile (12), so daß die in der Testposition befindliche zylindrische Trommel (6") nun in die in der Fig. 1 bezeichnete Position (6) gelangt, wo der Prüfling entladen wird.

Um den Drehvorgang des Radsternes (5) zu ermöglichen und in den Positionen (6' und 6) das Be- und Entladen in einfacher Weise gestalten zu können, sind in dem Gestell (2) zwischen einem vorderen Träger (2a), der sich V-förmig zur Plattform (3) hin nach oben erweitert, und einer hinteren Wand (2b) des Gestelles zum einen die Lagerungen für die Achse (13) des Radsternes (5), zum anderen aber - jeweils an der vorderen bzw. hinteren Wand - Deckel (14) angeordnet, von denen einer in der Fig. 4 im einzelnen dargestellt ist und erläutert wird. Der vordere und der hintere Deckel (14) werden daher gegen die Stirnwand (15) der zylindrischen Trommel (6) gedrückt, sobald diese die obere Position (6") erreicht hat und der Radstern (5) über einen nicht näher gezeigten Antrieb (36) zum Stillstand gekommen ist. Ist die Leckprüfung beendet, so werden beide Deckel (14) wieder axial von den Stirnseiten (15) der Trommel (6) entfernt und der Radstern (5) kann im Sinn der Pfeile (12) gedreht werden, bis die Trommeln die jeweils nächste Position erreicht haben.

Wie die Fig. 4 zeigt, ist der in der Fig. 2 zu erkennende Deckel (14) mit einem umlaufenden Rand (16) und mit einer Dichtung (17) versehen, mit der er sich dicht an dem Flansch (15) der Trommel (6) anlegen kann, wenn diese die Position (6") erreicht hat. Der Deckel (14), der in etwa kreisförmig ausgebildet ist, ist zu diesem Zweck fest auf einer Achse (18) angeordnet, die über einen pneumatischen oder hydraulischen Zylinder (19) in Richtung ihrer Achse (20) aus der Schließposition (18) in die Position (18') verschoben werden kann, in der der Deckel (14), in seiner Lage (14'), von dem Flansch (15) der Trommel (6) abgehoben ist. Die Achse (18) ist längsverschiebbar in einem Lager (20) eines Lagerbockes (21) angeordnet, der fest mit dem Gestell (2) verbunden ist, wie in Fig. 4 angedeutet ist. Der hydraulische oder pneumatische Zylinder (19) ist ebenfalls fest mit dem Lagerbock (21) verschraubt. Seine Kolbenstange (22) dagegen greift über ein Zwischenstück (24) an einem fest mit der Achse (18) verbundenen Ring (23) an, so daß die Achse (18) aus der geschlossenen Stellung in die geöffnete Stellung (18') verschiebbar ist. Dem Zwischenstück (24), das verdrehbar gegenüber der Kolbenstange (22) mit Hilfe eines Handgriffes (25) ist, kommt dabei die Aufgabe zu, den hydraulischen Zylinder (19) vollständig von dem Ring (23) abkoppeln zu können, um Montage- oder Demontagevorgänge vornehmen zu können. Hierauf kommt es aber bei der vorliegenden Erfindung nicht an.

An dem Deckel (14) ist mit Hilfe eines Befestigungsringes (26) ein Ringwulst (27) einer aus elastischem Kunststoff bestehenden balgartigen Kappe (28) befestigt und zwischen dem Ring (26) und dem Deckel (24) dicht eingeklemmt. Die Kappe (28) besteht aus einem balgartig wirkenden Außenrand (29), der einstückig in eine kreisförmige Wand (28a) übergeht, die etwa parallel zu der Fläche des Ringes (26) und zum Deckel (14) und damit auch parallel zu der Ebene verläuft, in der der stirnseitige Dichtflansch (15) der Tonne (6) verläuft. Auf der von dem Inneren der Tonne (6) abgewandten Teil der Wand (28a) schließt ein von dieser Wand und von dem Deckel (14) begrenzter Raum (30) an, der, wie durch die schematisch angedeuteten Öffnungen (31) zum Ausdruck kommen soll, mit der Atmosphäre außerhalb der abgeschlossenen Trommel (6) in Verbindung steht. Innerhalb der Trommel (6) befindet sich in der Position (6") der Fig. 1 ein Faß (9), das strichpunktiert angedeutet ist. Die im wesentlichen ebene Stirnwand (9a) des Fasses (9) liegt in der in der Fig. 4 oben gezeigten geschlossenen Stellung der Trommel (6) (Position 6") in der Mitte an der kreisförmigen Wand (28a) an. Die Wand (28a) drückt beim Ausführungsbeispiel aber auch auf aus dem Stirnwandbereich (9a) herausragende Stutzen (32), die beispielsweise die Füllstutzen des Fasses sein können. In der geöffneten Stellung des Deckels (14') besteht genügend Axialabstand zwischen dem Stirnrand (15) der Trommel (6) und der Wand (28a) der Abstützkappe (28).

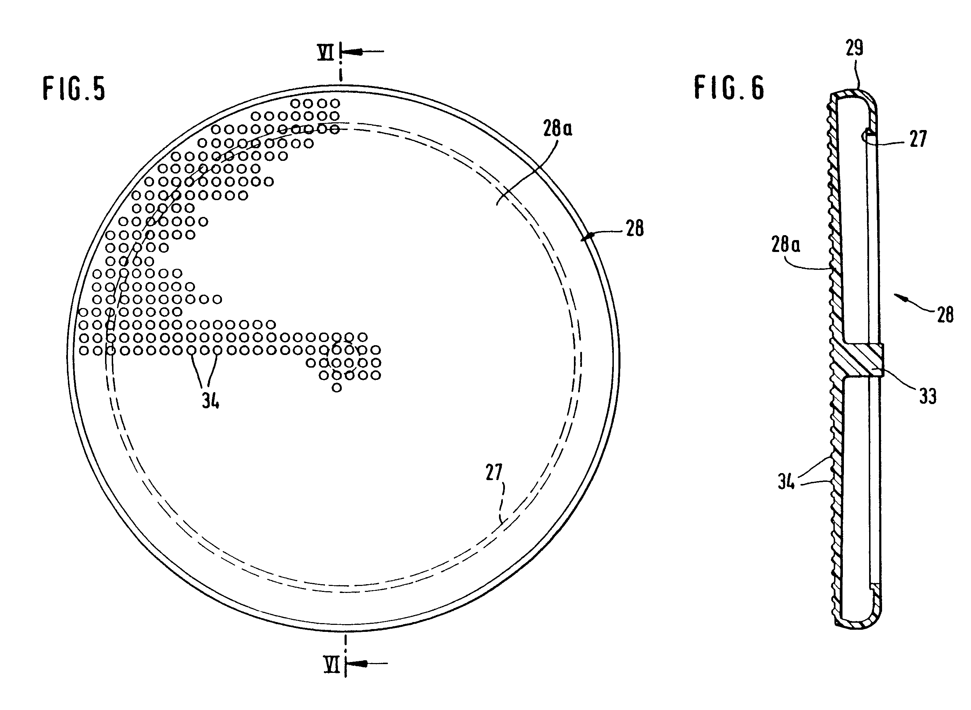

Aus den Fig. 5 und 6 ist zu erkennen, daß die Abstützkappe (28) in ihrer Mitte mit einem zum Wulst (27) hin abstehenden zylindrischen Zapfen (33) versehen ist, der etwas über die Ebene des Wulstes (27) nach hinten hinausragt. Dieser Zapfen (33) dient als mechanische Absicherung der Position der Abstützkappe (28) am Deckel (14).

Die Fig. 5 und 6 zeigen aber auch, daß die dem Inneren der Trommel (6) zugewandte Seite der Wand (28a) mit einer Vielzahl von aus der Wandfläche vorstehenden einzelnen Noppen (34) versehen ist, die beim Ausführungsbeispiel halbrund sind und daher die Form von Kugelabschnitten aufweisen. Diese Ausbildung der Außenseite der Abdeckkappe (28) stellt sicher, daß sich die Wand (28a) an keiner Stelle so dicht an eine Gegenwand, beispielsweise an die Stirnwand (9a) eines Fasses anlegen kann, daß ein Druckausgleich zwischen den Außenbereichen der membran artigen Wand (28a) und deren Innenbereich nicht mehr möglich ist.

Wird daher die neue Einrichtung zur Leckprüfung in der eingangs erwähnten Weise eingesetzt, so sorgt der in der Position (6'') im Inneren der geschlossenen Trommel (6) (Fig. 4 oben) angelegte Unterdruck dafür, daß die membranartige Wand (28a) der Abstützkappe (28) aufgrund der im Raum (30) und im Innenraum (35) der Trommel (6) auftretenden Druckdifferenz nach links gegen die Stirnwand (9a) des Fasses (9) gedrückt wird. Gegen dessen zweite Stirnseite, die nicht gezeigt ist, drückt eine gleiche Abdeckkappe (28), die an dem zweiten spiegelsymmetrisch zum Deckel (14) angeordneten Deckel sitzt, so daß die Lage des Fasses innerhalb der Trommel (6) während des Lecktestes gesichert ist. Da im Inneren des Fasses (9) der gleiche Druck wie im Raum (30) herrscht, neigt die Stirnwand (9a) des Fasses (9) dazu, mit der gleichen Kraft nach rechts verformt zu werden, mit der die membranartige Wand (28a) nach links verformt wird. Die haubenartige Abstützung (28) ist daher geeignet, ein übermäßiges Ausbeulen der Stirnwand (9a) zu vermeiden, ohne daß gesonderte, aufwendige Vorrichtungen zum Einstellen einer Gegenkraft notwendig sind. Trotzdem kann die gesamte Oberfläche des Fasses einwandfrei auf Dichtheit geprüft werden.

## Ansprüche

1. Vorrichtung zur Prüfung der Dichtheit von Behältern, insbesondere von Fässern, die mit mindestens einer im wesentlichen eben verlaufenden Stirnwand versehen sind, bestehend aus mindestens einer Prüfkammer zur Aufnahme der Behälter, aus Einrichtungen, mit denen die Prüfkammer evakuierbar ist und aus einer jeweils der Stirnwand des Behälters zugeordneten, an der Prüfkammer angebrachten Abstützeinrichtung, mit der ein Ausbeulen der Stirnwand verhindert wird, dadurch gekennzeichnet, daß die Abstützeinrichtung aus einer elastischen, an ihrer der Stirnwand zugewandten Seite mit Vorsprüngen zur Abstützung an dieser versehen und an ihrer Rückseite an einen Raum (30), in dem der Atmosphärendruck herrscht, angrenzenden Wand (28a) besteht, die in etwa parallel zu der Stirnwand (9a) angeordnet und mit ihren Rändern (27) dicht an einem Teil (14) der Prüfkammer (6) gehalten ist.

2. Vorrichtung nach Anspruch 1. dadurch gekennzeichnet, daß die Fläche der Wand (28a) in etwa an die Fläche der abzustützenden Stirnwand (9a) angepaßt ist.

3. Vorrichtung nach Anspruch 1. dadurch gekennzeichnet, daß die elastische Wand (28a) an einem abnehmbaren Deckel (14) der Prüfkammer (6) angeordnet ist.

4. Vorrichtung nach den Ansprüchen 1 und 2 für die Prüfung von zylindrischen Fässern. dadurch gekennzeichnet, daß die elastische Wand (28a) aus einer balgförmigen Kunststoffkappe (28) mit einem umlaufenden Rand (27) besteht.

5. Vorrichtung nach Anspruch 4. dadurch gekennzeichnet, daß die Stirnseite (28a) der Kunststoffkappe (28) die elastische Wand bildet und daß die Vorsprünge als über die Stirnfläche gleichmäßig verteilten Noppen (34) ausgebildet sind.

6. Vorrichtung nach Anspruch 5. dadurch gekennzeichnet, daß die Noppen (34) als halbrund abgeflachte Knöpfe ausgebildet sind.

7. Vorrichtung nach einem der Ansprüche 4 bis 6, dadurch gekennzeichnet, daß der umlaufende Rand (29) der Kunststoffkappe (28) zur Mitte hin eingezogen ausgebildet ist und dort einen umlaufenden Befestigungswulst (27) bildet.

8. Vorrichtung nach einem der Ansprüche 4 bis 7, dadurch gekennzeichnet, daß die Materialstärke der Kunststoffkappe (28) im Bereich der Stirnwand (28a) größer ist als im Bereich des umlaufenden Randes (29).

9. Vorrichtung nach Anspruch 8. dadurch gekennzeichnet, daß die Materialstärke der Kunststoffkappe (28) im Bereich der Stirnwand (28) vom Rand aus zur Mitte hin zunimmt.

10. Vorrichtung nach Anspruch 9. dadurch gekennzeichnet, daß in der Mitte der Stirnwand (28a) ein sich nach der von den Noppen (34) abgewandten Seite hin erstreckender Zapfen (33) angeformt ist, der mindestens bis etwa in die Ebene des Befestigungswulstes (27) reicht.

FIG. 1

FIG.2

6

FIG. 3

FIG. 4

FIG.6

FIG.5